# Europäisches Patentamt
## European Patent Office
## Office européen des brevets

(19)

(11) Veröffentlichungsnummer: **0 206 038**
**A2**

(12) **EUROPÄISCHE PATENTANMELDUNG**

(21) Anmeldenummer: **86107666.9**

(22) Anmeldetag: **05.06.86**

(51) Int. Cl.⁴: **B 64 F  1/36**

(30) Priorität: **15.06.85 DE 3521577**

(43) Veröffentlichungstag der Anmeldung: **30.12.86**
**Patentblatt 86/52**

(84) Benannte Vertragsstaaten: **AT BE CH FR GB IT LI LU NL SE**

(71) Anmelder: **Krauss-Maffei Aktiengesellschaft, Krauss-Maffei-Strasse 2, D-8000 München 50 (DE)**

(72) Erfinder: **Schuller, Reinhard, Dr.-Ing., Finsterwalderstrasse 38, D-8000 München 50 (DE)**
Erfinder: **Koch, Gerhard, Dipl.-Ing., Lohengrinstrasse 37, D-8034 Germering (DE)**

(54) **Sichtunabhängiges Leitsystem für im Flughafen-Bodenbereich zu bewegende Flugzeuge und Betriebsfahrzeuge.**

(57) Zum sichtunabhängigen und kollisionssicheren Leiten von im Flughafen-Bodenbereich zu bewegenden Fahrzeugen, wie z.B. Flugzeugen und Flughafen-Betriebsfahrzeugen wird vorgeschlagen, den Flughafenbereich mit einem, einem Eisenbahngleissystem entsprechenden Linienleitersystem auszustatten, das mittels schaltbarer Linienleiter-Verzweigungen die Betriebspunkte des Flughafens abdeckt, und die Fahrzeuge mit einem Gerät zum Signalaustausch mit dem Linienleitersystem und mit einem nebeltauglichen Naherkennungssystem auszurüsten.

K r a u s s - M a f f e i
Aktiengesellschaft
8000 München 50                      KMF 108 a

- 1 -

Sichtunabhängiges Leitsystem für im Flughafen-Bodenbereich zu bewegende Flugzeuge und Betriebsfahrzeuge

Die Erfindung bezieht sich auf ein sichtunabhängiges
Leitsystem für im Flughafenbereich zu bewegende Betriebsfahrzeuge.

Aus der Zeitschrift INTERAVIA, Volume XI-No. 2, 1956, Seiten 130 bis 132 ist bereits ein sichtunabhängiges Überwachungsradar für den Flughafenbereich bekannt, mit dem die Bewegungen der Flugzeuge während der Start- und Landephase sowie während des Rollens im Vorfeldbereich vom Turm des Flughafens erfaßbar sind. Desgleichen läßt sich damit die Sicherheit bei die Rollwege der Flugzeuge kreuzenden Fahrwegen für Flughafenbetriebsfahrzeuge erhöhen. In Notfallsituationen lassen sich damit auch Rettungsfahrzeuge zum Einsatzort dirigieren.

Mit diesem bekannten sichtunabhängigen Flughafenbereich-Überwachungssystem läßt sich die Sicherheit jedoch nur in sehr begrenztem Maße steigern, da in jedem Fall am Ort noch so gute Sichtverhältnisse herrschen müssen, daß der Pilot noch die Rollwege bzw. die Fahrer von Betriebsfahrzeugen noch die Fahrbahn im Nahbereich erkennen können. Die Abwendung von Kollisionsgefahren setzt darüberhinaus höchste Überwachungsintensität seitens des Bedienungspersonals voraus, so daß die Anwendung des bekannten Überwachungsradars nur bei einem eingeschränkten Flughafenbetrieb vertretbar ist.

- 2 -

Der Erfindung liegt die Aufgabe zugrunde, ein kollisionssicheres Leitsystem für im Flughafen-Bodenbereich zu bewegende Flugzeuge und Betriebsfahrzeuge zu schaffen, das auch bei vollkommen ungenügenden Sichtverhältnissen eine genaue Fahrlinienführung für Flugzeuge und Betriebsfahrzeuge ermöglicht und die exakte Zusammenführung von Schleppfahrzeugen und Flugzeugen zu einem präzise und automatisch leitbaren Schleppverband erlaubt.

Diese Aufgabe wird mit den Merkmalen aus dem Kennzeichen des Patentanspruchs 1 gelöst. Damit ist sichergestellt, daß Betriebsfahrzeuge, Flugzeuge und Schleppverbände im Flughafenbereich ohne Manövrieranweisungen Dritter mit normaler Fahrgeschwindigkeit auf den vorgeschriebenen Bahnen zu den Bestimmungsorten gelangen können, wobei das Nahortungssystem einem Fahrzeug- bzw. Flugzeugführer stets eine so weit reichende Erkennungsmöglichkeit vermittelt, daß er Hindernisse rechtzeitig erkennen kann.

In einer bevorzugten Ausführungsform ist das Linienleitersystem mit einer zweckmäßigerweise im Tower des Flughafens angeordneten Leitzentrale verbunden, in der das Linienleitersystem entsprechend dem Gleissystem eines Eisenbahnstellwerkes dargestellt ist. Neben einer Anzeige über die momentane Position der Flugzeuge und Fahrzeuge lassen sich damit deren Bewegungen steuern und überwachen, wobei ein an sich aus dem Eisenbahnwesen bekanntes Blocksicherungssystem zur automatischen Abstandssicherung zwischen den Flugzeugen, Betriebsfahrzeugen und Schleppverbänden einen kollisionsfreien Betrieb gewährleistet.

Vorzugsweise sind im Landebereich der Landebahn Induktionsschleifen angeordnet, durch welche die Landung eines Flugzeugs angezeigt werden kann, das dann bei einer V-förmigen Aufgabelung des zum Landebahnende führenden Linienleiterstranges eingefangen und in das Linienleitersystem eingefädelt werden kann.

Bei Verwendung eines auf Infrarotbasis arbeitenden Wärmebildgerätes als Naherkennungssystem kann die Sicherheit noch entscheidend dadurch verbessert werden, daß neben den an den Flugzeugen und Betriebsfahrzeugen angeordneten Infrarotstrahlern noch stationäre Infrarotstrahler installiert sind, wodurch sich an kritischen oder wichtigen Punkten wie z.B. an Linienleiter-Weichen oder am Terminal eine besonders gute Ausleuchtung mit entsprechend gesteigerter Sichtweite und -qualität erzielen läßt.

Vorzugsweise wird das Linienleitersystem mittels eines frequenzüberlagernden Nachrichtenübermittlungssystems als Nachrichtenkanal genutzt.

Ein Ausführungsbeispiel der Erfindung ist in der Zeichnung dargestellt und wird nachstehend näher erläutert.
Es zeigen
    Fig. 1 den schematischen Lageplan eines Flughafens
         und
    Fig. 2 das Bugteil eines Flugzeugs mit angekoppeltem Schleppfahrzeug.

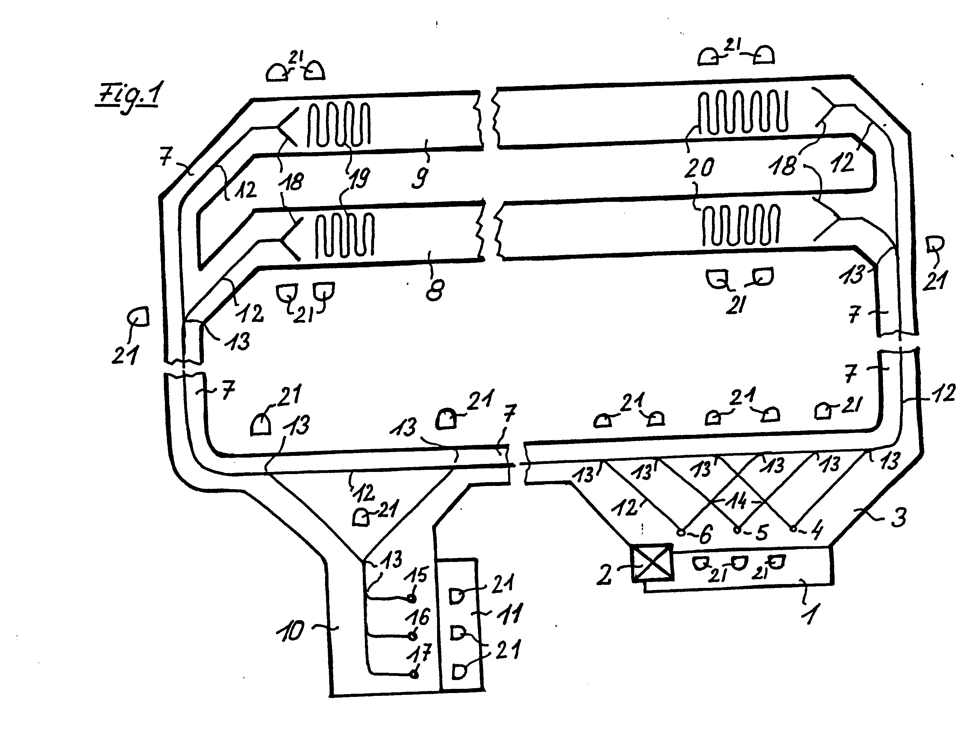

In dem Lageplan nach Fig. 1 weist der Flughafen ein Flughafengebäude 1 auf, das vom Tower 2 überragt wird. Vor dem Flughafengebäude befindet sich das Vorfeld 3 mit Flugzeugstellplätzen 4 bis 6, die zum Ein- und Aussteigen der Fluggäste, Be- und Entladen, Tanken und Abstellen bestimmt sind.

Vom Vorfeld 3 führen Rollbahnen 7 zu zwei parallelen Start- und Landebahnen 8 und 9 sowie zu einem Abstellplatz 10 vor einer Werfthalle 11.

In den Rollbahnen 7, den Start- und Landebahnen 8 und 9 sowie im Vorfeld 3 und im Abstellplatz 10 sind unter der Pistenoberfläche Linienleiter 12 verlegt, die ein Linienleitersystem bilden, mit dem sämtliche wichtigen Betriebspunkte untereinander verbunden sind.

Das Linienleitersystem umfaßt Weichen 13, Kreuzungen 14 sowie Stellpositionen, wie die Flugzeugstellplätze 4 bis 6 auf dem Vorfeld 3 oder die Abstellplätze 15 bis 17 vor der Werfthalle 11, die zum Abstellen und zur Wartung der Flugzeuge bestimmt sind.

An den Enden der Start- und Landebahnen 8 und 9 weisen die Linienleiter V-förmige Aufgabelungen 18 auf.

Im Landebereich der Start- und Landebahnen 8 und 9 sind in der Piste Induktionsschleifen 19 und 20 verlegt.

An den Weichen 13, an den Enden der Start- und Landebahnen 8 und 9 sowie am Flughafengebäude 1 und an der Werfthalle 11 sind Infrarotstrahler 21 angeordnet.

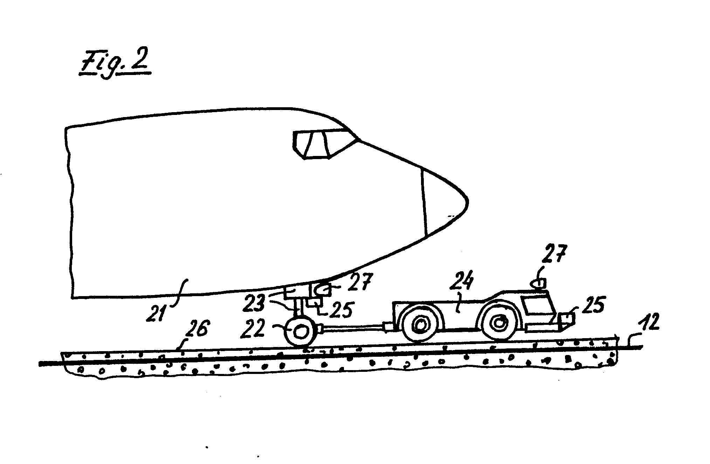

Die Fig. 2 zeigt das Bugteil eines Flugzeugs 21 mit ausgefahrenem Bugrad 22 an dessen Bugradsäule 23 ein Flugzeugschlepper 24 angekoppelt ist. Das Flugzeug 21 und der Flugzeugschlepper 24 sind mit einem Gerät 25 zum Signalaustausch mit einem unter der Oberfläche der Piste 26 verlegten Linienleiter 12 versehen. An der Bugradsäule 23 und am Flugzeugschlepper 24 sind Infrarotstrahler 27 und 28 angeordnet.

Neben dem Flugzeugschlepper 24 können auch andere Flughafen-Betriebsfahrzeuge, wie z.B. Einweisungs-, Versorgungs-, Tank-, Rettungs- und Feuerwehr-Fahrzeuge mit einem Gerät zum Signalaustausch mit dem Linienleiter ausgerüstet sein.

Die Geräte zum Signalaustausch mit dem Linienleiter sind mit einer automatischen Steuerungsanlage gekoppelt, durch die sich die Betriebsfahrzeuge selbsttätig entlang der Linienführung der Linienleiter 12 lenken können.

Im Flughafenbetrieb, bei dem durch starken Nebel extrem ungünstige Sichtbedingungen herrschen können, wird die Landung eines Flugzeugs zunächst durch Überrollen der Induktionsschleifen 19 oder 20 registriert und in einer vorzugsweise im Tower 2 des Flughafengebäudes 1 angeordneten Leitzentrale angezeigt. Das Flugzeug 21 rollt in die V-förmige Aufgabelung 18 des Linienleiters und kann mit Hilfe des Gerätes 25 zum Signalaustausch in das Linienleitersystem eingefädelt werden. Dabei kann die Steuerung des Bugrades automatisch oder durch den Flugzeugführer erfolgen.

Am Ende der Landebahn wird das Flugzeug an den über das Linienleitersystem herangeführten Flugzeugschlepper 24 angekoppelt, wobei die Führer des Flugzeugs und des Flugzeugschleppers mittels des Naherkennungssystems jeweils genau über Position, Richtung und Ankopplungsdetails ins Bild gesetzt werden. In dem in der Zeichnung dargestellten Ausführungsbeispiel wird als Naherkennungssystem ein auf Infrarotbasis arbeitendes Wärmebildgerät verwendet.

Zur Ausleuchtung der Umgebung sind am Flugzeug und am Flugzeugschlepper Infrarotstrahler 27 angeordnet, wobei die Ausleuchtung und somit der Erkennungsbereich an besonders wichtigen Stellen, wie z.B. der Ankopplungsstelle am Ende der Landebahnen 8 und 9 noch durch stationäre Infrarotstrahler 21 erweitert werden kann. Weitere wichtige Bereiche sind das Vorfeld 3 und die Abstellfläche 10 sowie die Weichen 13, bei denen der Lichtkegel des Infrarotstrahlers 27 eines an der Weiche in eine andere Richtung auszulenkenden Flugzeugschleppers 24 unter Umständen nicht ausreicht.

Der Schleppverband kann mit präzise wirkender automatischer Lenkung an jede vom Linienleitersystem abgedeckte Position im Flughafenbereich gefahren werden, wobei die Bewegung des Schleppverbandes in einem das Linienleitsystem nach Art eines Eisenbahngleisnetzes wiedergebenden Schaltbild in der Leitzentrale überwacht und durch Schalten der Weichen 13 vom Tower 2 aus gesteuert werden kann. Durch ein aus der Eisenbahntechnik an sich bekanntes Blocksicherungssystem können die Bewegungen der Schleppverbände und sonstiger Flughafenbetriebsfahrzeuge mit automatischer Abstandssicherung bewegt werden. Eine Kollisionsgefahr ist dadurch ausgeschlossen.

Durch das Naherkennungssystem sind die Fahrzeugführer darüberhinaus in der Lage, von der Leitzentrale nicht erfaßbare Hindernisse zu erkennen und entsprechende Ausweich- oder Bremsmanöver einzuleiten.

Das Linienleitersystem ist ferner als Nachrichtenkanal nutzbar, durch den über ein frequenzüberlagerndes Übermittlungssystem sämtliche Führer von
Fahrzeugen untereinander und mit der Leitzentrale
in Sprechverbindung stehen können. Der Funkverkehr
im Flughafenbereich wird damit entlastet.

Patentansprüche

1. Sichtunabhängiges Leitsystem für im Flughafenbodenbereich zu bewegende Fahrzeuge wie z.B. Flugzeuge und Betriebsfahrzeuge, insbesondere für Schleppfahrzeuge und für aus einem Flugzeug und einem Schleppfahrzeug bestehende Schleppverbände, d a - d u r c h g e k e n n z e i c h n e t , daß
- der Flughafenbereich mit einem, einem Eisenbahngleissystem entsprechenden Linienleitersystem ausgestattet ist, das mittels schaltbarer Linienleiter-Verzweigungen, wie z.B. Weichen (13), die Betriebspunkte des Flughafens abdeckt,.
- die Fahrzeuge mit einem Gerät (25) zum Signalaustausch mit dem Linienleitersystem ausgerüstet sind und
- die Fahrzeuge ein nebeltaugliches Naherkennungssystem, beispielsweise ein Nahfeldradar, ein Ultraschall- oder ein Wärmebildgerät aufweisen.

2. Leitsystem nach Anspruch 1, d a d u r c h g e - k e n n z e i c h n e t , daß das Linienleitersystem mit einer Leitzentrale verbunden ist, die ein an sich aus der Schienenfahrzeugtechnik bekanntes Blocksicherungssystem aufweist, mit dem die im Flughafenbereich zu bewegenden Fahrzeuge ortbar und mit automatischer Abstandssicherungen zueinander manövrierbar sind.

3. Leitsystem nach einem der Ansprüche 1 oder 2, d a - d u r c h g e k e n n z e i c h n e t , daß die Flugzeuge auf der Landebahn (8, 9) durch im Landebereich angeordnete Induktionsschleifen (10, 20) ortbar sind.

4. Leitsystem nach einem der Ansprüche 1 bis 3, d a - d u r c h  g e k e n n z e i c h n e t , daß das Linienleitersystem im Landebereich der Landebahn (8, 9) zwecks trichterförmiger Einfädelung ankommender Flugzeuge in das Linienleitersystem eine V-förmige Aufgabelung 18 aufweist.

5. Leitsystem nach einem der Ansprüche 1 bis 4, d a - d u r c h  g e k e n n z e i c h n e t , daß als Naherkennungssystem ein auf Infrarotbasis arbeitendes Wärmebildgerät vorgesehen ist, bei dem neben den an den Fahrzeugen angeordneten Infrarotstrahlern (27) einer oder mehrere stationäre Infrarotstrahler (21) im Fahrbereich angeordnet sind.

6. Leitsystem nach einem der Ansprüche 1 bis 4, d a - d u r c h  g e k e n n z e i c h n e t , daß das Linienleitersystem als Nachrichtenkanal nutzbar ist.

*Fig. 1*

0206038

Fig.2